# EUROPÄISCHE PATENTSCHRIFT

(11) **EP 2 008 932 B1**
(45) Veröffentlichungstag und Bekanntmachung des Hinweises auf die Patenterteilung: **28.09.2016**
(21) Anmeldenummer: 08004039.7
(22) Anmeldetag: 05.03.2008
(51) Int. Cl.: B64D 11/06

(54) **Sitzvorrichtung mit Fahrzeugbehältervorrichtung**
Seat device with vehicle container device
Siège doté d'un dispositif de récipient de véhicule

(30) Priorität: 30.06.2007 DE 102007030565
(43) Veröffentlichungstag der Anmeldung: 31.12.2008
(73) Patentinhaber: Recaro Aircraft Seating GmbH & Co. KG, 74523 Schwäbisch Hall (DE)
(72) Erfinder: Wieland, Klaus, 74523 Bibersfeld (DE)
(74) Vertreter: Daub, Thomas

(56) Entgegenhaltungen:
- DE-U1-202004 008 069
- US-A- 4 306 748
- US-A1- 2006 163 917
- US-A1- 2007 015 422

## Beschreibung

### Stand der Technik

Die Erfindung betrifft eine Sitzvorrichtung, insbesondere eine Flugzeugsitzvorrichtung, nach dem Oberbegriff des Patentanspruchs 1.

Es sind bereits Flugzeugsitzvorrichtungen mit einer Schwimmwestenbehältervorrichtung bekannt. US 2007/015422 A1 offenbart eine Sitzvorrichtung nach dem Oberbegriff des Anspruchs 1 und eine Fahrzeugbehältervorrichtung nach dem Oberbegriff des Anspruchs 3. Der Erfindung liegt insbesondere die Aufgabe zugrunde, eine Sitzvorrichtung mit einer Schwimmwestenbehältervorrichtung bereitzustellen, die auch an einem Fluchtweg vorteilhaft angeordnet werden darf. Die Aufgabe wird jeweils gelöst durch die Merkmale der unabhängigen Patentansprüche, wobei weitere Ausgestaltungen der Erfindung den Unteransprüchen entnommen werden können.

### Vorteile der Erfindung

Die Erfindung geht aus von einer Sitzvorrichtung, insbesondere einer Flugzeugsitzvorrichtung, mit einer Schwimmwestenbehältervorrichtung.

Es wird vorgeschlagen, dass die Schwimmwestenbehältervorrichtung zumindest in geöffnetem und geschlossenem Zustand ausschließlich auf einer der Sitzvorrichtung zugewandten Seite einer vorderen Begrenzungsfläche angeordnet ist, wobei die vordere Begrenzungsfläche durch eine Fläche gebildet ist, die senkrecht zu einer Aufstandsfläche durch eine Sitzvorderseite verläuft. Eine Sitzvorrichtung mit einer solchen Behältervorrichtung kann vorteilhaft an einem Fluchtweg angeordnet werden, ohne dass Teile der Schwimmwestenbehältervörrichtung in den Fluchtweg ragen.

Eine Sitzvorrichtung umfasst vorteilhaft eine Sitzfläche, die dazu vorgesehen ist, eine Gewichtskraft, die eine in der Sitzvorrichtung sitzende Person ausübt, aufzunehmen. Ferner umfasst die Sitzvorrichtung vorteilhaft eine Rückenlehne. Unter der "Sitzvorderseite" soll eine der Rückenlehne gegenüberliegende Seite verstanden werden. Unter der "Sitzrichtung" soll eine zur Rückenlehne senkrechte Richtung verstanden werden, die ausgehend von der Rückenlehne in Richtung der Sitzvorderseite orientiert ist. Außerdem umfasst die Sitzvorrichtung vorteilhaft zumindest drei Befestigungspunkte, die dazu vorgesehen sind, die Sitzvorrichtung auf einem Boden anzuordnen. Diese Befestigungspunkte spannen die Aufstandsfläche auf.

Weiter wird vorgeschlagen, dass die Schwimmwestenbehältervorrichtung unterhalb der Sitzfläche der Sitzvorrichtung angeordnet ist. Dadurch kann eine Schwimmweste einfach aus der Schwimmwestenbehältervorrichtung entnommen werden, wobei dies insbesondere gilt, wenn die Schwimmwestenbehältervorrichtung so angeordnet ist, dass die Schwimmweste in Sitzrichtung entnommen werden kann. Unter "unten" soll eine Richtung verstanden werden, die senkrecht zur Aufstandsfläche von der Sitzfläche aus in Richtung Aufstandsfläche orientiert ist, bzw. unter "unterhalb der Sitzfläche" soll der Raum zwischen der Sitzfläche und der Aufstandsfläche verstanden werden.

Ferner wird eine erfindungsgemäße Fahrzeugbehältervorrichtung, insbesondere eine Schwimmwestenbehältervorrichtung, vorgeschlagen die eine Aufbewahrungseinheit und eine Deckeleinheit mit einer Deckelbefestigungseinheit umfasst, wobei eine Höhe der Deckeleinheit kleiner ist als eine Gesamthöhe der Fahrzeugbehältervorrichtung. Dadurch lässt sich eine vorteilhafte Fahrzeugbehältervorrichtung, deren Abmessungen in geöffnetem Zustand senkrecht zu einer Vertikalen gleich oder kleiner sind als die Abmessungen in geschlossenem Zustand, einfach realisieren. Eine solche Fahrzeugbehältervorrichtung ist insbesondere für eine Flugzeugsitzvorrichtung, die an einem Fluchtweg angeordnet werden soll, vorteilhaft. Unter einer "Fahrzeugbehältervorrichtung" soll insbesondere eine Behältervorrichtung für ein Wasserfahrzeug, wie beispielsweise ein Schiff, und/oder besonders vorteilhaft für ein Luftfahrzeug, wie beispielsweise ein Flugzeug, ein Hubschrauber und/oder ein Zeppelin, verstanden werden. Unter der "Gesamthöhe der Fahrzeugbehältervorrichtung" soll eine maximale Abmessung der Fahrzeugbehältervorrichtung in einer Orientierung, in der sie insbesondere in einer Grundstellung aufgestellt und/oder insbesondere an einer Sitzvorrichtung befestigt werden soll, parallel zu einer Vertikalen verstanden werden, wobei die "Vertikale" durch eine Richtung einer Gewichtskraft in der Grundstellung gegeben ist. Weiter soll unter der "Höhe der Deckeleinheit" eine Abmessung der Deckeleinheit parallel zur Vertikalen verstanden werden.

Insbesondere ist es vorteilhaft, wenn die Höhe der Deckeleinheit kleiner ist als 70% der Gesamthöhe der Schwimmwestenbehältervorrichtung, wobei 40% bis 60% bzw. ca. 50% der Gesamthöhe der Schwimmwestenbehältervorrichtung besonders vorteilhaft sind. Dadurch lässt sich eine vorteilhafte Position der Deckeleinheit insbesondere in geöffnetem Zustand einfach erreichen.

In einer weiteren Ausgestaltung der Erfindung umfasst die Deckelbefestigungseinheit ein form- und/oder kraftschlüssiges Befestigungsmittel, wobei ein Flausch- und Hakenband bzw. ein Klettverschluss besonders vorteilhaft ist. Durch ein so ausgestaltetes Befestigungsmittel kann die Deckeleinheit in geschlossenem Zustand vorteilhaft angeordnet und befestigt werden.

Ferner wird vorgeschlagen, dass die Deckelbefestigungseinheit wenigstens ein biegeweiches Haltemittel umfasst. Durch ein biegeweiches Haltemittel kann eine kostengünstige Befestigung der Deckeleinheit einfach realisiert werden. Unter einem "biegeweichen" Haltemittel soll insbesondere ein Haltemittel verstanden werden, das in einer Richtung, insbesondere quer zu seiner Längserstreckung, keine Kraft aufnehmen kann, wie beispielsweise eine Kette, ein Band oder besonders vorteilhaft ein Seil.

Besonders vorteilhaft ist es, wenn die Deckelbefestigungseinheit insbesondere zwei biegeweiche Haltemittel umfasst, die in einem äußeren Seitenbereich der Deckeleinheit und/oder in einem äußeren Seitenbereich der Aufbewahrungseinheit angeordnet sind. Durch zwei vorteilhaft gestaltete und angeordnete biegeweiche Haltemittel kann eine definierte Position der Deckeleinheit insbesondere in geöffnetem Zustand erreicht werden. Unter "Seitenbereichen" sollen Bereiche der Deckeleinheit bzw. der Aufbewahrungseinheit verstanden werden, die innerhalb eines Raumes liegen, der durch die äußeren 10% einer maximalen Abmessung der Deckeleinheit bzw. der Aufbewahrungseinheit in einer beliebigen Richtung und durch zu dieser Abmessung senkrechte Flächen aufgespannt wird. Unter "äußeren" Seitenbereichen sollen Seitenbereiche verstanden werden, bei denen die Richtung der maximalen Abmessung senkrecht zur Vertikalen und parallel zu einer Haupterstreckungsrichtung der Deckeleinheit ist.

Vorzugsweise ist an der Fahrzeugbehältervorrichtung eine Öffnungseinheit angeordnet, die eine Aussparung und ein Öffnungsmittel umfasst, wobei das Öffnungsmittel durch die Aussparung aus der Aufbewahrungseinheit nach außen geführt ist. Durch eine vorteilhaft ausgestaltete Öffnungseinheit kann die Fahrzeugbehältervorrichtung einfach geöffnet werden, wobei ein biegeweich ausgestaltetes Öffnungsmittel, wie beispielsweise ein Band, besonders vorteilhaft ist. Es sind aber auch andere, dem Fachmann als sinnvoll erscheinende Öffnungseinheiten denkbar.

Weiter wird vorgeschlagen, dass die Aufbewahrungseinheit mehrteilig ausgeführt ist. Dadurch wird ein einfaches Befüllen der Fahrzeugbehältervorrichtung ermöglicht. Insbesondere eine zweiteilige Ausführung gemäß der Erfindung ist einfach herzustellen.

Ferner ist es vorteilhaft, wenn die Aufbewahrungseinheit mindestens eine als Rasteinheit ausgebildete Verbindungseinheit umfasst, die dazu vorgesehen ist, Teile der Aufbewahrungseinheit miteinander zu verbinden. Durch eine als Rasteinheit ausgebildete Verbindungseinheit kann die Fahrzeugbehältervorrichtung ohne Werkzeug einfach geöffnet und befüllt werden. Besonders vorteilhaft, da besonders kostengünstig und einfach herzustellen, sind zwei einteilig mit der Aufbewahrungseinheit ausgeführte Rasteinheiten, die an gegenüberliegenden Seiten der Aufbewahrungseinheit angeordnet sind.

Weiter wird ein erfindungsgemäßes Öffnungsverfahren für eine Fahrzeugbehältervorrichtung vorgeschlagen, wobei die Deckeleinheit beim Öffnen der Behältervorrichtung um mindestens 170° Grad gedreht und/oder nach unten versetzt wird. Durch ein solches Öffnungsverfahren, insbesondere durch eine Drehung der Deckeleinheit um mindestens 170°, kann einfach erreicht werden, dass eine Sitzvorrichtung mit einer solchen Behältervorrichtung an einem Fluchtweg vorteilhaft angeordnet werden kann.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Flugzeugsitzvorrichtung mit einer Schwimmwestenbehältervorrichtung in geschlossenem Zustand in einer Seitenansicht,
- Fig. 2: die Schwimmwestenbehältervorrichtung in geschlossenem Zustand in der Seitenansicht,

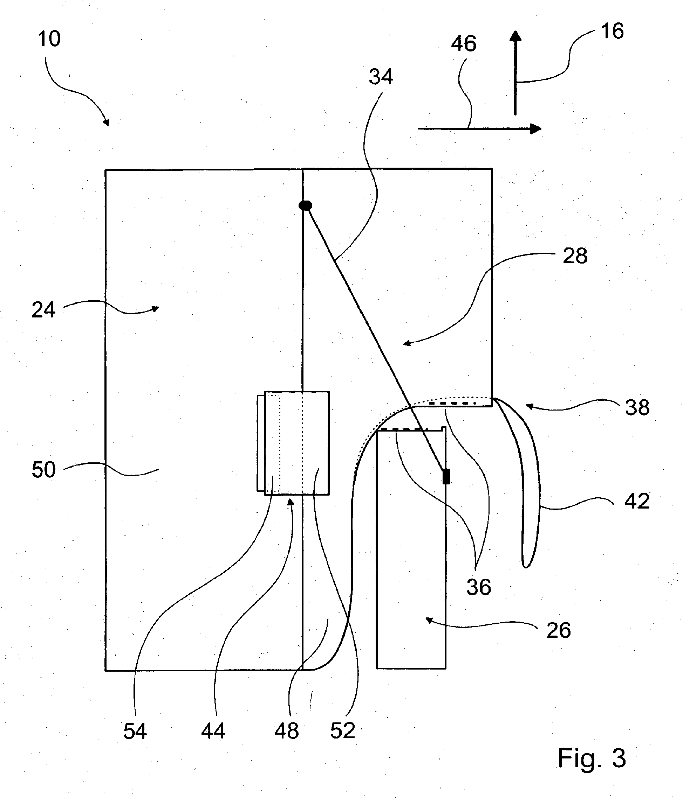

- Fig. 3: die Schwimmwestenbehältervorrichtung in geöffnetem Zustand in der Seitenansicht und
- Fig. 4: die Schwimmwestenbehältervörrichtung in geschlossenem Zustand in einer Frontansicht.

### Beschreibung des Ausführungsbeispiels

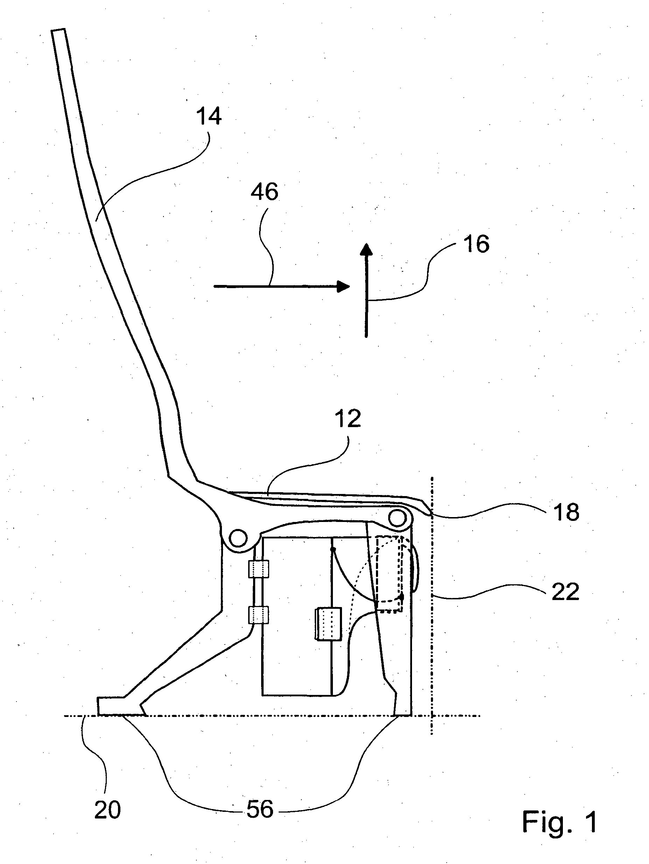

Figur 1 zeigt eine Sitzvorrichtung für ein Flugzeug mit einer Schwimmwestenbehältervorrichtung 10 für eine nicht näher dargestellte Schwimmweste in geschlossenem Zustand in einer Seitenansicht. Die Sitzvorrichtung besteht aus einer Sitzfläche 12 und einer Rückenlehne 14, die senkrecht zur Sitzfläche 12 an der Sitzfläche 12 angeordnet ist. Die Rückenlehne 14 ist auf einer einer Aufstandsfläche 20 abgewandten Seite der Sitzfläche 12 angeordnet. Eine der Sitzfläche 12 gegenüberliegende Seite ist eine Sitzvorderseite 18. Durch die Sitzvorderseite 18 und senkrecht zu der Aufstandsfläche 20 verläuft eine vordere Begrenzungsfläche 22. Die Aufstandsfläche 20 wird durch vier in einer Ebene liegende Befestigungspunkte 56 der Sitzvorrichtung aufgespannt. Die Befestigungspunkte 56 sind vorgesehen, die Sitzvorrichtung auf einem nicht näher dargestellten Boden zu befestigen. Die Schwimmwestenbehältervorrichtung 10 ist unterhalb der Sitzfläche 12 angeordnet.

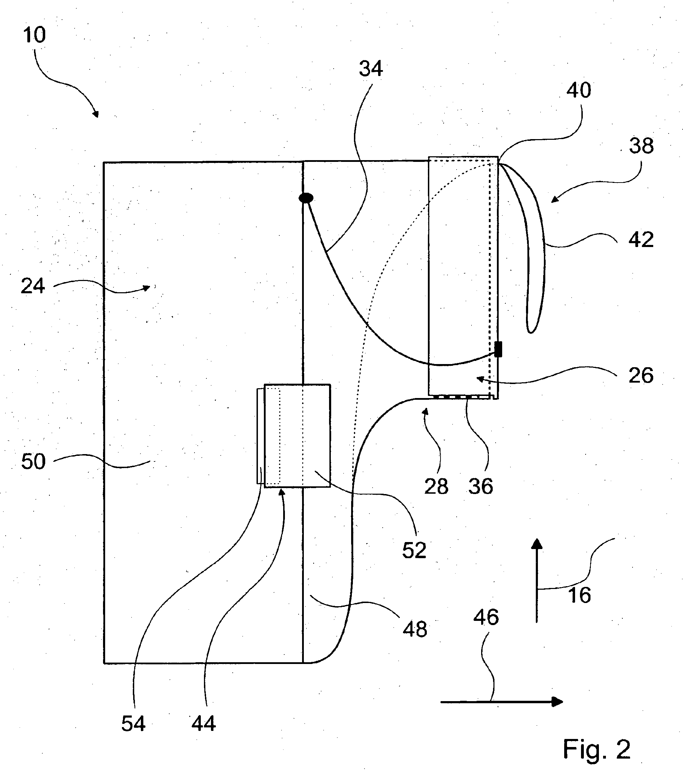

Die Schwimmwestenbehältervorrichtung 10 (Figur 2) umfasst eine Aufbewahrungseinheit 24 und eine Deckeleinheit 26 mit einer Deckelbefestigungseinheit 28. Sie ist aus einem Kunststoff hergestellt und an der Sitzvorrichtung befestigt.

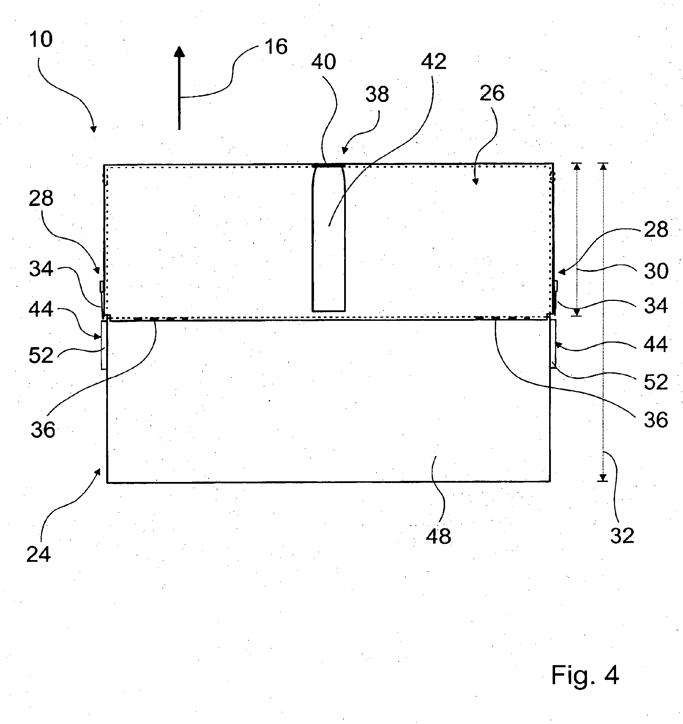

Die Deckeleinheit 26 verschließt eine Öffnung in der Aufbewahrungseinheit 24, durch die eine Schwimmweste entnommen werden kann. Die Schwimmwestenbehältervorrichtung 10 ist so angeordnet, dass die Schwimmweste in eine Sitzrichtung 46 entnommen werden kann. Eine parallel zur einer Vertikalen 16 gemessene Höhe 30 der Deckeleinheit 26 ist im Vergleich zu einer parallel zur Vertikalen 16 gemessenen Gesamthöhe 32 der Schwimmwestenbehältervorrichtung 10 auf ca. 50% reduziert (Figur 4).

In geschlossenem Zustand wird die Deckeleinheit 26 durch ein aus einem Flausch- und Hakenband 36 gebildetes form- und kraftschlüssiges Befestigungsmittel fixiert. Das Flauschband 36 ist an der Deckeleinheit 26 so angebracht, dass es Kontakt mit dem an der Aufbewahrungseinheit 24 angebrachten Hakenband 36 hat. Das Flausch- und Hakenband 36 ist an einer im geschlossenen Zustand unteren Seite der Deckeleinheit 26 angebracht. Um die für das Flausch- und Hakenband 36 nötige Kontaktfläche zwischen der Deckeleinheit 26 und der Aufbewahrungseinheit 24 zu schaffen, ist die Deckeleinheit 26 und ein Rand der Öffnung in der Aufbewahrungseinheit 24 einige Zentimeter stark ausgeführt. Insbesondere in den äußeren Seitenbereichen ist die Deckeleinheit 26 als ein Falz ausgeführt, der in die Ränder der Öffnung in der Aufbewahrungseinheit 24 eingreift.

Weiter sind die Deckeleinheit 26 und die Aufbewahrungseinheit 24 durch zwei aus Seilen 34 gebildete biegeweiche Haltemittel verbunden. Je ein Ende der Seile 34 ist an einer Außenseite der Aufbewahrungseinheit 24 angebracht, ein anderes Ende des Seils 34 ist an einer Außenseite der Deckeleinheit 26 in der unteren Hälfte der Deckeleinheit 26 angebracht.

Alternativ kann anstelle der durch die Seile 34 gebildeten biegeweichen Haltemittel 34 ein Scharnier verwendet werden, wobei die Anordnung des Scharniers und des Flausch- und Hakenbands 36 von der oben beschriebenen Anordnung von dem biegeweichen Haltemittel 34 und dem Flausch- und Hakenband 36 abweichen kann. Durch ein Scharnier kann ebenfalls eine definierte Klappbewegung der Deckeleinheit 26 erreicht werden.

Als eine Öffnungseinheit 38 ist in einem oberen Seitenbereich der Deckeleinheit 26 eine Aussparung 40 eingebracht, durch die ein als Band 42 ausgebildetes Öffnungsmittel aus der Schwimmwestenbehältervorrichtung 10 nach außen geführt wird. Das Band 42 ist mit einem Ende an der Innenseite der Aufbewahrungseinheit 24 befestigt. Beim Ziehen an einem anderen Ende dieses Bands 42 wird die Deckeleinheit 26 in Sitzrichtung 46 von der Aufbewahrungseinheit 24 abgehoben. Dieses Ende des Bands 42 ist als eine Schlaufe ausgeführt. Nach dem Abheben dreht sich die Deckeleinheit 26 und wird durch eine auf die Deckeleinheit 26 wirkende Gewichtskraft nach unten versetzt. Die Drehbewegung wird durch Befestigungspunkte der Seile 34 definiert. Geöffnet halten die Seile 34 die Deckeleinheit 26 in einer Position, in der sie ausgehend von der Position in geschlossenem Zustand um 180° gedreht und nach unten versetzt ist, wobei die Seile 34 die Deckeleinheit 26 daran hindern, die Aufstandsfläche 20 zu durchdringen.

Durch die Befestigung der Deckeleinheit 26 mit dem Flausch- und Hakenband 36 in geschlossenem Zustand und durch die Position in geöffnetem Zustand, in der die Seile 34 die Deckeleinheit 26 halten, wird sichergestellt, dass die Schwimmwestenbehältervorrichtung 10 in geöffnetem und geschlossenem Zustand ausschließlich auf der der Sitzvorrichtung zugewandten Seite der vorderen Begrenzungsfläche 22 angeordnet ist.

Um ein leichtes Befüllen der Aufbewahrungseinheit 24 zu ermöglichen, ist die Aufbewahrungseinheit 24 zweiteilig ausgeführt. Um ein leichtes Teilen der Aufbewahrungseinheit 24 ohne Werkzeug zu ermöglichen, wird eine Verbindungseinheit, die ein Vorderteil 48 und ein Rückteil 50 der Aufbewahrungseinheit 24 verbindet, aus zwei Rasteinheiten 44 gebildet. Die Rasteinheiten 44 bestehen jeweils aus einem federnden Rastmittel 52 an dem Vorderteil 48 der Aufbewahrungseinheit 24 und einer Rastaussparung 54 an dem Rückteil 50 der Aufbewahrungseinheit 24, wobei das Rastmittel 52 und die Rastaussparung 54 jeweils einteilig mit dem jeweiligen Teil 48, 50 der Aufbewahrungseinheit 24 ausgeführt sind.

**Bezugszeichen**

| | | | |
|---|---|---|---|
| 10 | Fahrzeugbehältervorrichtung | 34 | biegeweiches Haltemittel |
| 12 | Sitzfläche | 36 | Befestigungsmittel |
| 14 | Rückenlehne | 38 | Öffnungseinheit |
| 16 | Vertikale | 40 | Aussparung |
| 18 | Sitzvorderseite | 42 | Öffnungsmittel |
| 20 | Aufstandsfläche | 44 | Verbindungseinheit |
| 22 | vordere Begrenzungsfläche | 46 | Sitzrichtung |
| 24 | Aufbewahrungseinheit | 48 | Vorderteil der Aufbewahrungseinheit |
| 26 | Deckeleinheit | 50 | Rückteil der Aufbewahrungseinheit |
| 28 | Deckelbefestigungseinheit | 52 | federndes Rastmittel |
| 30 | Höhe der Deckeleinheit | 54 | Rastaussparung |
| 32 | Gesamthöhe der Fahrzeugbehältervorrichtung | 56 | Befestigungspunkt |

## Patentansprüche

1. Sitzvorrichtung, insbesondere eine Flugzeugsitzvorrichtung, mit einer Schwimmwestenbehältervorrichtung (10), die eine Aufbewahrungseinheit (24) und eine Deckeleinheit (26) mit einer Deckelbefestigungseinheit (28) umfasst und zumindest in geöffnetem und geschlossenem Zustand ausschließlich auf einer der Sitzvorrichtung zugewandten Seite einer vorderen Begrenzungsfläche (22) angeordnet ist, wobei die vordere Begrenzungsfläche (22) durch eine Fläche gebildet ist, die senkrecht zu einer Aufstandsfläche (20) durch eine Sitzvorderseite (18) verläuft,
**dadurch gekennzeichnet, dass**
die Aufbewahrungseinheit (24) zweiteilig ausgeführt ist.

2. Sitzvorrichtung nach Anspruch 1,
**dadurch gekennzeichnet, dass**
die Schwimmwestenbehältervorrichtung (10) unterhalb einer Sitzfläche (12) der Sitzvorrichtung angeordnet ist.

3. Fahrzeugbehältervorrichtung, insbesondere Schwimmwestenbehältervorrichtung (10), die eine Aufbewahrungseinheit (24) und eine Deckeleinheit (26) mit einer Deckelbefestigungseinheit (28) umfasst, insbesondere für eine Sitzvorrichtung nach Anspruch 1 oder 2,
**dadurch gekennzeichnet, dass** die aufbewahrungseinheit (24) zweiteilig ausgeführt ist, wobei
eine in einem geschlossenen Zustand parallel zu einer Vertikalen (16) gemessene Höhe (30) der Deckeleinheit (26) kleiner ist als eine parallel zur Vertikalen (16) gemessene Gesamthöhe (32) der Fahrzeugbehältervorrichtung (10).

4. Fahrzeugbehältervorrichtung nach Anspruch 3,
**dadurch gekennzeichnet, dass**
die Höhe (30) der Deckeleinheit (26) kleiner ist als 70% der Gesamthöhe (32) der Fahrzeugbehältervorrichtung (10).

5. Fahrzeugbehältervorrichtung nach Anspruch 3 oder 4,
**dadurch gekennzeichnet, dass**
die Deckelbefestigungseinheit (28) zumindest ein form- und/oder kraftschlüssiges Befestigungsmittel (36) umfasst.

6. Fahrzeugbehältervorrichtung nach einem der Ansprüche 3 bis 5,
**dadurch gekennzeichnet, dass**
die Deckelbefestigungseinheit (28) wenigstens ein biegeweiches Haltemittel (34) umfasst.

7. Fahrzeugbehältervorrichtung nach Anspruch 6,
**dadurch gekennzeichnet, dass**
die Deckelbefestigungseinheit (28) insbesondere zwei biegeweiche Haltemittel (34) umfasst, die in einem äußeren Seitenbereich der Deckeleinheit (26) und/oder in einem äußeren Seitenbereich der Aufbewahrungseinheit (24) angeordnet sind.

8. Fahrzeugbehältervorrichtung nach einem der Ansprüche 3 bis 7,
**gekennzeichnet durch**
eine Öffnungseinheit (38), die eine Aussparung (40) und ein Öffnungsmittel (42) umfasst, wobei das Öffnungsmittel (42) **durch** die Aussparung (40) aus der Aufbewahrungseinheit (24) nach außen geführt ist.

9. Fahrzeugbehältervorrichtung nach einem der Ansprüche 3 bis 8,
**dadurch gekennzeichnet, dass**
die Aufbewahrungseinheit (24) mehrteilig ausgeführt ist.

10. Fahrzeugbehältervorrichtung nach Anspruch 9,
**dadurch gekennzeichnet, dass**
die Aufbewahrungseinheit (24) mindestens eine als Rasteinheit ausgebildete Verbindungseinheit (44) umfasst, die dazu vorgesehen ist, Teile der Aufbewahrungseinheit (24) miteinander zu verbinden.

11. Fahrzeugbehältervorrichtung nach einem der Ansprüche 3 bis 10,
**dadurch gekennzeichnet, dass**
die Deckeleinheit (26) eine Öffnung in der Aufbewahrungseinheit (24) verschließt, durch die eine Schwimmweste entnommen werden kann.

12. Verfahren mit einer Fahrzeugbehältervorrichtung, die eine Aufbewahrungseinheit (24) und eine Deckeleinheit (26) mit einer Deckelbefestigungseinheit (28) umfasst, nach einem der Ansprüche 3 bis 10, wobei
die Deckeleinheit (26) beim Öffnen der Fahrzeugbehältervorrichtung um mindestens 170° gedreht und/oder nach unten versetzt wird.

13. Fahrzeugbehältervorrichtung nach Anspruch 12,
**dadurch gekennzeichnet, dass**
die Deckeleinheit (26) bei einem Ziehen der Öffnungseinheit (38) in Sitzrichtung (46) von der Aufbewahrungseinheit (24) abgehoben wird.

## Claims

1. Seat device, in particular airplane seat device, with a life jacket container device (10) which comprises a storage unit (24) and a cover unit (26) with a cover fixing unit (28) and which is arranged, at least in an opened and a closed state, exclusively on a side of a delimiting front surface (22) facing the seat device,
the delimiting front surface (22) being embodied by a surface extending through a seat front face (18) perpendicularly to a mounting surface (20),
**characterised in that**
the storage unit (24) is embodied in a two-part implementation.

2. Seat device according to claim 1,
**characterised in that**
the life jacket container device (10) is arranged below a seat surface (12) of the seat device.

3. Vehicle container device, in particular life jacket container device (10), comprising a storage unit (24) and a cover unit (26) with a cover fixing unit (28), in particular for a seat device according to claim 1 or 2,
**characterised in that**
the storage unit (24) is embodied in a two-part implementation, wherein a height (30) of the cover unit (26) measured in parallel to a vertical (16) in a closed state is smaller than a total height (32) of the vehicle container device (10) measured in parallel to the vertical (16).

4. Vehicle container device according to claim 3,
**characterised in that**
the height (30) of the cover unit (26) is smaller than 70 % of the total height (32) of the vehicle container device (10).

5. Vehicle container device according to claim 3 or 4,
**characterised in that**
the cover fixing unit (28) comprises at least one form-fit and/or force-fit fixing means (36).

6. Vehicle container device according to one of claims 3 to 5,
**characterised in that**
the cover fixing unit (28) comprises at least one pliable rigid holding means (34).

7. Vehicle container device according to claim 6,
**characterised in that**
the cover fixing unit (28) comprises in particular two pliable holding means (34), which are arranged in an outer lateral region of the cover unit (26) and/or in an outer lateral region of the storage unit (24).

8. Vehicle container device according to one of claims 3 to 7,
**characterised by**
an opening unit (38) comprising a recess (40) and an opening means (42), the opening means (42) being guided out of the storage unit (24) to the outside through the recess (40).

9. Vehicle container device according to one of claims 3 to 8,
**characterised in that**
the storage unit (24) is embodied in a multi-part implementation.

10. Vehicle container device according to claim 9,
**characterised in that**
the storage unit (24) comprises at least one connection unit (44) embodied as a latch unit, which is provided for connecting parts of the storage unit (24) to each other.

11. Vehicle container device according to one of claims 3 to 10,
**characterised in that**
the cover unit (26) closes an opening in the storage unit (24) by which a life jacket can be retrieved.

12. Method with a vehicle container device comprising a storage unit (24) and a cover unit (26) with a cover fixing unit (28), according to one of claims 3 to 10, wherein the cover unit (26) is rotated by at least 170 degrees and/or is shifted downwards when the vehicle container device is opened.

13. Vehicle container device according to claim 12,
**characterised in that**
the cover unit (26) is lifted from the storage unit (24) when the opening unit (38) is pulled in a seat direction (46).

## Revendications

1. Dispositif de siège, notamment un dispositif de siège d'avion, avec un dispositif récipient de gilet de sauvetage (10), comportant une unité de dépôt (24) et une unité de couvercle (26) avec une unité de fixation de couvercle (28) et étant disposé, au moins dans un état ouvert et fermé, exclusivement d'un côté d'une surface délimitant antérieure (22), lequel est tourné vers le dispositif de siège, la surface délimitant antérieure (22) étant implémentée par une surface s'étendant perpendiculairement à une surface d'élévation (20) à travers d'une face avant de siège (18),
**caractérisé en ce que**
l'unité de dépôt (24) est implémentée en deux parties.

2. Dispositif de siège selon la revendication 1,
**caractérisé en ce que**
le dispositif récipient de gilet de sauvetage (10) est disposé au-dessous d'une surface de siège (12) du dispositif de siège.

3. Dispositif récipient de véhicule, notamment dispositif récipient de gilet de sauvetage (10), comprenant une unité de dépôt (24) et une unité de couvercle (26) avec une unité de fixation de couvercle (28), en particulier pour un dispositif de siège selon la revendication 1 ou 2,
**caractérisé en ce que**
l'unité de dépôt (24) est implémentée en deux parties, une hauteur (30) de l'unité de couvercle (26) mesurée en parallèle à une verticale (16) en état fermé étant inférieure à une hauteur totale (32) du dispositif récipient de véhicule (10) mesurée en parallèle à la verticale (16).

4. Dispositif récipient de véhicule selon la revendication 3,
**caractérisé en ce que**
la hauteur (30) de l'unité de couvercle (26) est inférieure à 70 % de la hauteur totale (32) du dispositif récipient de véhicule (10).

5. Dispositif récipient de véhicule selon la revendication 3 ou 4,
**caractérisé en ce que**
l'unité de fixation de couvercle (28) comporte au moins un moyen de fixation par forme et/ou par adhérence (36).

6. Dispositif récipient de véhicule selon l'une quelconque des revendications 3 à 5,
**caractérisé en ce que**
l'unité de fixation de couvercle (28) comporte au moins un moyen de prise pliable (34).

7. Dispositif récipient de véhicule selon la revendication 6,
**caractérisé en ce que**
l'unité de fixation de couvercle (28) comporte en particulier deux moyens de prise pliables (34), lesquels sont disposés dans une région latérale extérieure de l'unité de couvercle (26) et/ou dans une région latérale extérieure de l'unité de dépôt (24).

8. Dispositif récipient de véhicule selon l'une quelconque des revendications 3 à 7,
**caractérisé par**
une unité d'ouverture (38), laquelle comporte une échancrure (40) et un moyen d'ouverture (42), le moyen d'ouverture (42) étant guidé de l'unité de dépôt (24) vers l'extérieur à travers de l'échancrure (40).

9. Dispositif récipient de véhicule selon l'une quelconque des revendications 3 à 8,
**caractérisé en ce que**
l'unité de dépôt (24) est implémentée en plusieurs parties.

10. Dispositif récipient de véhicule selon la revendication 9,
**caractérisé en ce que**
l'unité de dépôt (24) comporte au moins une unité de raccordement (44) implémentée comme unité d'encliquetage, laquelle est prévue à raccorder des parties de l'unité de dépôt (24) l'une à l'autre.

11. Dispositif récipient de véhicule l'une quelconque des revendications 3 à 10,
**caractérisé en ce que**
l'unité de couvercle (26) ferme une aperture dans l'unité de dépôt (24), à travers de laquelle un gilet de sauvetage peut être enlevé.

12. Procédé avec un dispositif récipient de véhicule comprenant une unité de dépôt (24) et une unité de couvercle (26) avec une unité de fixation de couvercle (28) selon l'une quelconque des revendications 3 à 10,
l'unité de couvercle (26) étant tournée par au moins 170 degrés et/ou déplacée vers le bas si le dispositif récipient de véhicule est ouvert.

13. Dispositif récipient de véhicule selon la revendication 12,
**caractérisé en ce que**
l'unité de couvercle (26) est soulevée de l'unité de dépôt (24) si l'unité d'ouverture (38) est tirée dans une direction de siège (46).
